# EUROPÄISCHE PATENTSCHRIFT

(11) **EP 0 882 851 B1**
(45) Veröffentlichungstag und Bekanntmachung des Hinweises auf die Patenterteilung: **27.08.2003**
(21) Anmeldenummer: 98110105.8
(22) Anmeldetag: 03.06.1998
(51) Int. Cl.: E04C 2/52, A61G 12/00

(54) **Versorgungseinheit für Krankenzimmer**
Supply unit for sickrooms
Unité d'alimentation pour chambre d'hôpital

(30) Priorität: 03.06.1997 DE 29709652 U
(43) Veröffentlichungstag der Anmeldung: 09.12.1998
(73) Patentinhaber: TRILUX-LENZE GmbH & Co. KG, D-59759 Arnsberg (DE)
(72) Erfinder: Draken, Dieter, 59755 Arnsberg (DE); Schmidt, Helmut, 59519 Möhnesee (DE)
(74) Vertreter: Selting, Günther, Dipl.-Ing.

(56) Entgegenhaltungen:
- DE-A- 3 922 634
- US-A- 4 104 710
- US-A- 4 338 485

## Beschreibung

Die Erfindung betrifft eine Versorgungseinheit für Krankenzimmer.

Versorgungseinheiten für Krankenzimmer weisen Gasanschlüsse, z.B. für Sauerstoff, Stickstoff oder andere für die Krankenbehandlung erforderliche Gase, Stromsteckdosen sowie Buchsen zum Anschließen von Telefonen, Datenübertragungsanschlüsse u.dgl. auf. Üblicherweise sind Versorgungseinheiten neben dem Krankenbett an der Wand angeordnet.

Aus DE 39 22 634 A1 ist eine Versorgungseinheit bekannt, deren Gehäuse aus Elementen des Innenausbaus aufgebaut ist. Das Gehäuse der Versorgungseinheit bildet eine aus Holz o.dgl. zusammengefügte U-förmige Kappe, die schnappend auf eine Gehäuserückwand aufgesetzt ist. Das Gehäuse ist neben einem Krankenbett an der Wand befestigt, so daß die Öffnung des Gehäuses in Richtung der Wand weist. Dadurch ist von dem U-förmigen Gehäuse und der Wand ein Kanal gebildet, in dem Gaszuleitungen und die tragenden Teile für die Gasanschlüsse angeordnet sind. Als tragende Teile der Halterung der Gasanschlüsse sind vertikal angeordnete Rohre vorgesehen, die fest mit der Raumwand verbunden sind. Mit den Halterungen sind Gasanschlußkupplungen verbunden, die fest in der Frontseite des Gehäuses montiert sind. Zur Wartung der Gasleitungen, der in den Gasleitungen angeordneten Ventile und der Gasanschlußkupplungen, die aus Sicherheitsgründen regelmäßig durchgeführt werden muß, ist es erforderlich, die Befestigung der Gasanschlußkupplungen in der Frontseite des Gehäuses zu lösen. Erst nach dem Lösen der Befestigungen der Gasanschlußkupplungen kann das Gehäuse von der Wand abgenommen werden und die Gasleitungen, die Gasventile und die Gasanschlußkupplungen sind zur Wartung zugänglich.

Aufgabe der Erfindung ist es, eine Versorgungseinheit von einfachem Aufbau und geringem Gewicht zu schaffen, deren Versorgungseinrichtungen leicht zugänglich sind.

Die Lösung der Aufgabe erfolgt erfindungsgemäß durch die Merkmale des Anspruchs 1.

Erfindungsgemäß ist ein Gehäuse einer Versorgungseinheit aus vertikalen seitlichen Profilleisten aufgebaut, die an der Frontseite durch vordere Querstreben und an der Rückseite durch hintere Querstreben miteinander verbunden sind. Aufgrund dieses skelettartigen Aufbaus des Gehäuses ist das Gehäuse bei hoher Stabilität sehr leicht. An den hinteren Querstreben sind Halterungen befestigt, die Gasanschlußkupplungen tragen. Die Halterungen der Gasanschlußkupplungen werden somit von dem Gehäuse getragen. Die Querstreben dienen sowohl als Versteifung des Gehäuses als auch zum Tragen der Halterungen. Das gesamte Gehäuse besteht aus vorgefertigten Teilen und kann komplett vormontiert werden, so daß im Krankenzimmer lediglich die Gasleitungen mit den Gasanschlußkupplungen verbunden werden müssen. Ferner können die Halterungen der Gasanschlußkupplungen mit den hinteren Querstreben vormontiert werden und bilden somit ein Modul, das während der Endmontage im Krankenzimmer auf einfache Weise zusätzlich in beliebiger Höhe montiert werden kann. Vorzugsweise handelt es sich bei den seitlichen Profilleisten des Gehäuses um identische Strangpreßteile, so daß die Herstellung und Montage weiter vereinfacht ist.

Die Rückseite des Gehäuses kann auch durch eine einzelne Querstrebe in Form einer Rückwand ausgebildet sein. Das Vorsehen mehrerer Querstreben hat jedoch den Vorteil, daß das Gewicht des Gehäuses verringert wird und vormontierte hintere Querstreben mit Halterungen für die Gasanschlußkupplungen in beliebigen Stellungen mit den seitlichen Profilleisten verbunden werden können.

Erfindungsgemäß ist die Frontseite des Gehäuses von einer Tür bedeckt. In der Tür sind Öffnungen zur Aufnahme der Gasanschlußkupplungen angeordnet. Die Gasanschlußkupplungen ragen durch die Öffnungen der Tür, so daß von außen externe Gasverbraucher an die Gasanschlußkupplungen anschließbar sind. Zur Wartung der Gasanschlußkupplungen sowie der in dem Gehäuse angeordneten Gasleitungen, Gasventile und weiterer Versorgungseinrichtungen wird die Tür der Versorgungseinheit geöffnet, so daß die im Inneren des Gehäuses angeordneten Versorgungseinrichtungen gut zugänglich sind. Ein Demontieren von Halterungen der Gasanschlußkupplungen ist nicht erforderlich, da die Gasanschlußkupplungen nicht mit der Tür verbunden sind und beim Öffnen der Tür stehen bleiben.

In den Seitenprofilen des Gehäuses können elektrische Steckdosen angeordnet sein. Bei den Steckdosen handelt es sich beispielsweise um herkömmliche Stromsteckdosen zum Anschluß elektrischer Geräte, um Telefonbuchsen oder um Anschlußbuchsen für Datenleitungen oder ähnliches. Vorzugsweise schließen die Seitenprofile mit den hinteren Querstreben bzw. der Raumwand einen spitzen Winkel ein, so daß die in den Seitenprofilen angeordneten Steckdosen leichter zugänglich sind.

Die seitlichen Profilleisten des Gehäuses weisen vorzugsweise einen ersten längslaufenden Schraubkanal auf, in dem die vorderen Querstreben und die Türscharniere beispielsweise durch selbstschneidende Schrauben befestigbar sind. Die Schrauben werden quer zum Schraubkanal in diesen eingeschraubt und können an beliebiger Stelle im Schraubkanal angeordnet werden, so daß die Querstreben oder die Türscharniere in beliebiger Höhe angeordnet werden können. Der erste Schraubenkanal ist vorzugsweise in einem Sockel mit schräger Anlagefläche ausgebildet. An der Anlagefläche können entsprechende Ansätze der vorderen Querstreben anliegen, so daß die Lage der vorderen Querstreben festgelegt ist. Die Lage der vorderen Querstreben kann so festgelegt sein, daß sie als Anschlag für die Tür dienen. Ferner hintergreift ein Schloßriegel eines in der Tür angeordneten Schlosses die schräge Anlagefläche, so daß eine Schloßfalle für den Schloßriegel entfallen kann.

Zur Befestigung der hinteren Querträger weisen die Profilleisten einen zweiten längslaufenden Schraubkanal auf, so daß die hinteren Querstreben auf einfache Weise in einer beliebigen Höhe der Profilleisten angeordnet werden können.

Nachfolgend wird die Erfindung anhand einer bevorzugten Ausführungsform unter Bezugnahme auf die anliegenden Zeichnungen näher erläutert. Es zeigen:
- Fig. 1: eine schematische Draufsicht einer Anordnung von zwei Versorgungseinheiten in einem Krankenzimmer;
- Fig. 2: eine schematische Draufsicht auf eine Versorgungseinheit;
- Fig. 3: einen schematischen Querschnitt einer Versorgungseinheit entlang der Linie III-III in Fig. 1, und
- Fig. 4: einen schematischen Querschnitt einer hinteren Querstrebe der Versorgungseinheit entlang der Linie IV-IV in Fig. 2.

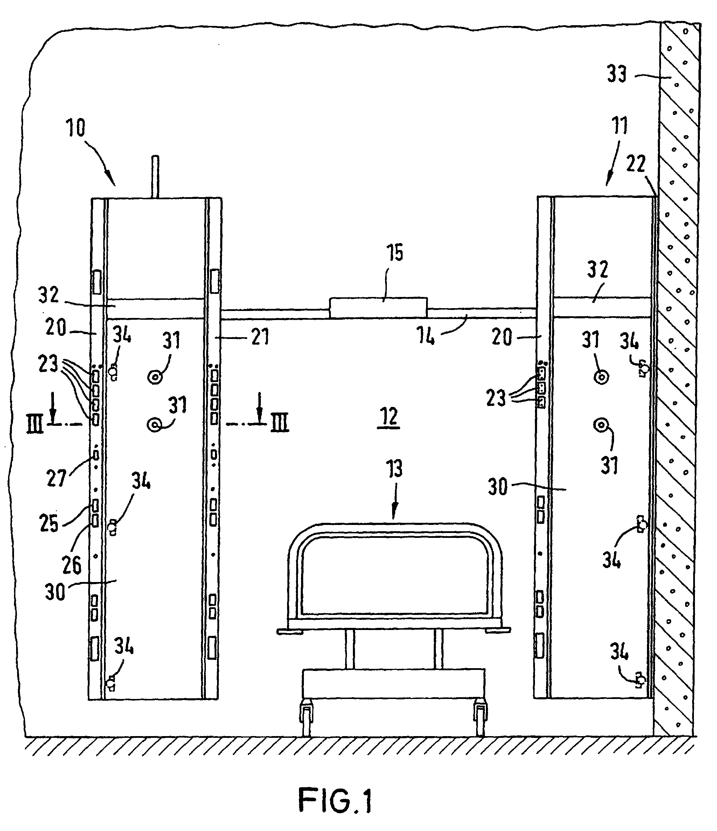

In Fig. 1 ist eine Anordnung von zwei Versorgungseinheiten 10,11 dargestellt. Die Versorgungseinheiten 10,11 sind in einem Abstand zueinander an einer Wand 12 befestigt, der mindestens der Breite eines Krankenbetts 13 entspricht. Die beiden Versorgungseinheiten 10,11 sind mittels eines horizontalen Querträgers 14 miteinander verbunden. An dem Querträger 14 ist eine nach unten abstrahlende Leuchte 15 schwenkbar befestigt. Die Leuchte 15 kann als Leseleuchte für einen Patienten oder durch Schwenken um die Achse des Querträgers als Beleuchtung während einer medizinischen Versorgung des Patienten eingesetzt werden.

Die Versorgungseinheiten 10,11 weisen in seitlichen, vertikal angeordneten Profilleisten 20,21 mehrere Steckdosen 23 zum Anschluß elektrischer Geräte, eine Telefonbuchse 25, eine Buchse 26 zum Anschluß von Datenübertragungsgeräten wie beispielsweise eines Computers, und einen Schalter 27 zum Aus- und Einschalten der Leuchte 15 auf. Ferner können zusätzliche Steckdosen, Schalter und Anschlußbuchsen in den Profilleisten 20,21 angeordnet sein.

Die Frontseiten der Versorgungseinheiten 10,11 sind jeweils von einer Tür 30 verschlossen. In der Tür 30 sind Gasanschlußkupplungen 31 angeordnet. An die Gasanschlußkupplungen 31 können über Schläuche Gasverbraucher wie Sauerstoffgeräte angeschlossen werden. An den Türen 30 sind Leuchten 32 befestigt, die zur indirekten Beleuchtung des Raums nach oben Licht abstrahlen.

Entsprechend der in Fig. 1 dargestellten Anordnung von Versorgungseinheiten 10,11 können mehrere Versorgungseinheiten jeweils in Abständen, die mindestens der Breite eines Krankenbetts 13 entsprechen, angeordnet sein. Zwischen den einzelnen Versorgungseinheiten sind jeweils Querträger 14 mit Leuchten 15 angeordnet. Hierbei ist die Versorgungseinheit 10 zwischen zwei Krankenbetten angeordnet und kann daher zur Versorgung von zwei Patienten eingesetzt werden. Bei einer entsprechenden Anzahl von Gasanschlußkupplungen ist es somit möglich, zwischen zwei Versorgungseinheiten zwei Krankenbetten anzuordnen.

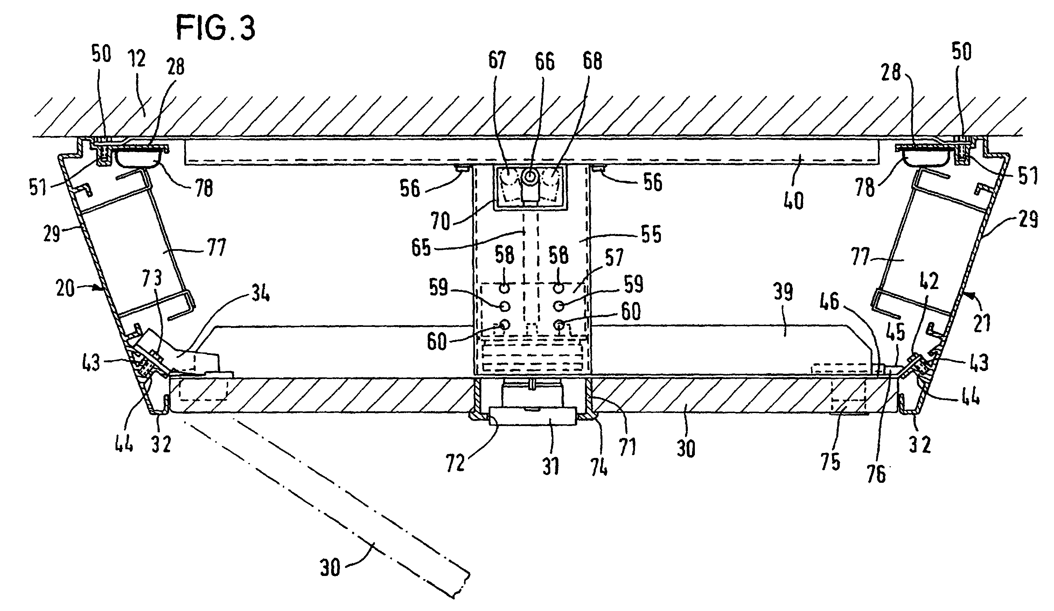

In den Profilleisten 20,21 der Versorgungseinheiten 10,11 sind Steckdosen 23 und dgl. angeordnet. Die Profilleisten 20,21 weisen einen Montageschenkel 28 und einen Seitenwandschenkel 29 auf (Fig. 3). Der Montageschenkel 28 liegt an der Wand 12 an. Der sichtbare Seitenwandschenkel 29 schließt mit dem Montageschenkel 28 einen spitzen Winkel ein. Parallel zu dem Montageschenkel 28 ist mit dem Seitenwandschenkel 29 ein Blendenansatz 32 verbunden, der mit der Tür 30 abschließt. Die beiden Profilleisten 20,21 bestehen aus demselben Alustrangpreßteil mit über die gesamte Länge gleichbleibendem Querschnitt. Die Profilleisten 20,21 sind spiegelbildlich zueinander angeordnet. Wird eine Versorgungseinheit 11 in der Ecke eines Raums angeordnet (Fig. 1), so wird in der Ecke eine andere seitliche Profilleiste 22 verwendet als bei der Versorgungseinheit 10, bei der beide seitlichen Profilleisten 20,21 sichtbar sind. Die in der Ecke verlaufende Profilleiste 22 ist rechtwinklig zur Tür 30 angeordnet und verläuft parallel zu einer Wand 33 und senkrecht zur Wand 12. Da die Profilleiste 22 von der Wand 33 verdeckt ist, sind in dieser keine Steckdosen oder sonstigen Anschlüsse vorgesehen.

Die Tür 30 der Versorgungseinheit 11 ist über Scharniere 34 mit der seitlichen Profilleiste 22 verbunden, so daß die Tür 30 beim Öffnen in Richtung der Wand 33 geschwenkt wird.

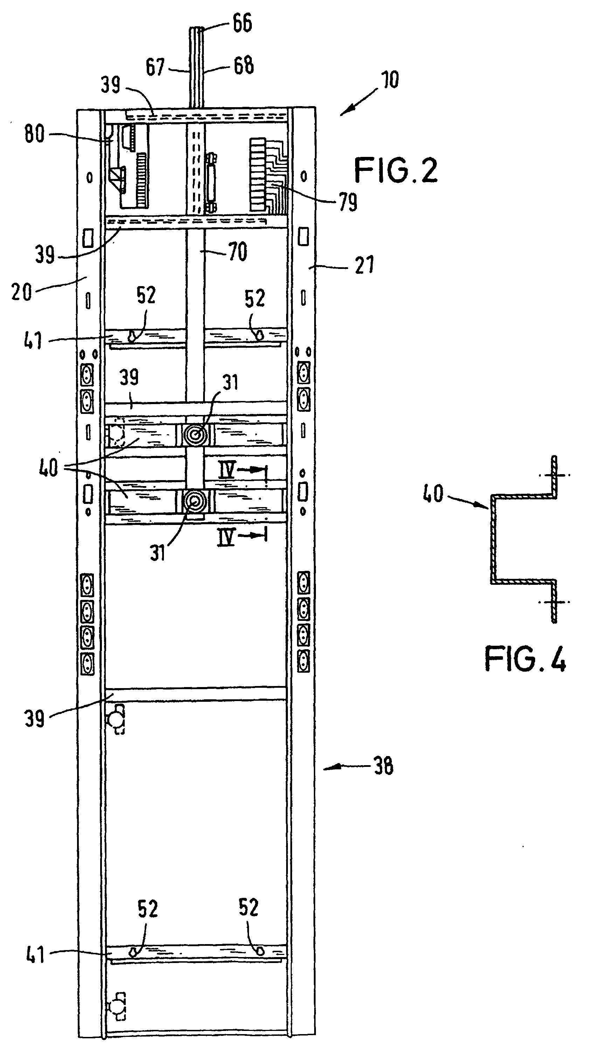

In Fig. 2 ist die Versorgungseinheit 10 zur Verdeutlichung des Aufbaus ohne Tür 30 dargestellt. Die Versorgungseinheit 10 weist ein tragendes Gehäuse 38 auf, das aus den beiden seitlichen Profilleisten 20,21, vorderen Querstreben 39 und hinteren Querstreben 40,41 besteht. Die vorderen Querstreben 39 sind mit den seitlichen Profilleisten 20,21 mittels Schrauben 42 (Fig. 3) verbunden. Hierzu weisen die Seitenwandschenkel 29 der Profilleisten 20,21 jeweils einen längslaufenden ersten Schraubkanal 43 auf. Der Schraubkanal 43 ist in einem Sockel 44 ausgebildet, der so an den Profilleisten 20,21 angeordnet ist, daß er eine schräge Auflagefläche 45 aufweist. Auf der Auflagefläche 45 liegen Ansätze 46 der vorderen Querstreben 39 auf. In den Ansätzen 46 sind Löcher vorgesehen, durch welche die selbstschneidenden Schrauben 42 quer in dem Schraubkanal 43 verschraubt werden. Da der Schraubkanal 43 über die gesamte Länge der Profilleisten 20,21 verläuft, können die vorderen Querstreben 39 in beliebiger Höhe mit den seitlichen Profilleisten 20,21 verbunden werden. Zur Erhöhung der Stabilität sind die Profilleisten 39 im Querschnitt L-förmig ausgebildet.

Die hinteren Querstreben 40 liegen an der Wand 12 an und sind mittels selbstschneidenden Schrauben 50 ebenfalls mit den beiden Profilleisten 20,21 verbunden. Hierzu weisen die Montageschenkel 28 der Profilleisten 20,21 einen zweiten Schraubkanal 51 auf, der sich ebenfalls über die gesamte Länge der Profilleisten 20,21 erstreckt. Somit können auch die Halterungen 40 in beliebiger Höhe mit den Profilleisten 21,22 verbunden werden. Zur Erhöhung der Stabilität weisen die hinteren Querstreben 40 einen im wesentlichen U-förmigen Querschnitt auf (Fig. 4).

Die zusätzlichen hinteren Querstreben 41 sind entsprechend der Querstreben 40 mit den Montageschenkeln 28 der beiden Profilleisten 20,21 verbunden. Die hinteren Querstreben 41 weisen einen L-förmigen Querschnitt auf und dienen zur Befestigung des Gehäuses 38 an der Wand 12. Hierzu weisen die hinteren Querstreben 41 Löcher 52 auf (Fig. 2). Die Löcher 52 zum Befestigen des Gehäuses 38 an der Wand 12 können auch in den hinteren Querstreben 40 vorgesehen sein. Wenn die hinteren Querstreben 40 entsprechend in einem oberen und unteren Bereich des Gehäuses 38 angeordnet sind, sind die hinteren Querstreben 40 zur Stabilisierung des Gehäuses 38 ausreichend, so daß die zusätzlichen hinteren Querstreben 41 entfallen können.

Mit jeder hinteren Querstrebe 40 ist eine Halterung 55 mittels Schrauben 56 verbunden. Die hintere Querstrebe 40 bildet zusammen mit der Halterung 55 ein Modul, das in beliebiger Höhe mit den Montageschenkeln 28 der Profilleisten 20,21 verbindbar ist. In der horizontal angeordneten Halterung 55 ist die Gasanschlußkupplung 31 mittels einer Befestigungsplatte 57 befestigt. Um verschiedene Typen von Anschlußkupplungen 31 in derselben Halterung 55 befestigen zu können, weist die Halterung 55 mehrere Lochpaare 58,59,60 auf. Die Befestigungsplatte 57 weist ebenfalls mehrere Löcher auf, so daß die Befestigungsplatte 57 in unterschiedlichen Stellungen an die Halterung 55 montierbar ist.

Die Gasanschlußkupplung 31 ist mit einer Gaszuleitung 65 verbunden, die in der Halterung 55 horizontal von der Anschlußkupplung 31 in Richtung der hinteren Querstrebe 40 zu einer vertikal angeordneten Gaszuleitung 66 verläuft. Die Gaszuleitung 65 kann anstelle mit der Gaszuleitung 66 auch mit Gaszuleitungen 67,68 verbunden sein. Die Gaszuleitungen 66,67,68 sind in einem vertikalen, im Querschnitt reckteckigen, Schutzgehäuse 70 angeordnet. Das Schutzgehäuse 70 läuft von einer unteren Halterung 55 für die Gasanschlußkupplung 31 vertikal nach oben zu einer oder mehreren weiteren Halterungen 55 weiterer Gasanschlußkupplungen 31 (Fig. 2). Von der obersten Halterung 55 verläuft das Schutzgehäuse 70 vertikal nach oben aus der Versorgungseinheit hinaus. Die Gaszuleitungen 66,67,68 sind mit außerhalb der Versorgungseinheit 10 angeordneten Gasvorratsbehältern verbunden.

Die Gasanschlußkupplung 31 (Fig. 3) ist in einer Öffnung 71 der Tür 30 angeordnet. In der Öffnung 71 der Tür 30 ist ein Blendring 74 angeordnet, der fest mit der Tür 30 verbunden ist und die Gasanschlußkupplung 31 umschließt. Zwischen der Gasanschlußkupplung 31 und dem Blendring 74 besteht ein Spalt 72, damit die Tür 30 um das Scharnier 34 schwenkbar ist. Die Scharniere 34 sind mittels Schrauben 73 in dem ersten Schraubenkanal 43 befestigt. Bei geöffneter Tür 30, deren Stellung gestrichelt dargestellt ist, bleibt die Gasanschlußkupplung 31, die fest mit der Halterung 55 verbunden ist, stehen und ist somit gut zugänglich. Somit können Wartungsarbeiten an der Gasanschlußkupplung 31 oder einem in der Gasanschlußkupplung vorgesehenen Ventil einfach durchgeführt werden. In der Tür 30 ist ferner ein Schloß 75 angeordnet. Der Schloßriegel 76 greift zum sicheren Verschließen der Tür 30 hinter die schräge Anlagefläche 45. Eine zusätzliche Falle für den Schloßriegel 76 kann entfallen, da die vorderen Querstreben 39 so angeordnet sind, daß sie zusätzlich den Türanschlag bilden.

An den Seitenwandschenkeln 29 der Profilleisten 20,21 sind an den Innenseiten Aufnahmedosen 77 angeordnet. In den Aufnahmedosen 77 sind die Steckdosen 23 oder in entsprechend ausgebildete Aufnahmedosen die Buchsen 25,26 befestigt. Des weiteren sind mit den Montageschenkeln 28 der Profilleisten 20,21 vertikal verlaufende Kabelkanäle 78 verbunden, in denen die Kabel für die Steckdosen 23, die Buchsen 25,26, den Schalter 27 und ggf. für weitere elektrische Anschluß- oder Betätigungselemente untergebracht sind. Zum Anschluß der in den Profilleisten 20,21 angeordneten elektrischen Bauteile sind im oberen Bereich der Versorgungseinheit 10 Starkstromklemmen 79 und Schwachstromklemmen 80 angeordnet, die mit den in den Kabelkanälen 78 angeordneten Kabeln verbunden sind.

## Patentansprüche

1. Versorgungseinheit für Krankenzimmer, mit einem Gehäuse (38), das in einer Gehäusewand Gasanschlußkupplungen (31) für den Anschluß externer Gasverbraucher aufweist, wobei die Gasanschlußkupplungen (31) an einer gehäusefesten Halterung (55) angebracht sind,
**dadurch gekennzeichnet,**
**daß** das Gehäuse (38) vertikale seitliche Profilleisten (20,21) aufweist, die an der Frontseite durch vordere Querstreben (39) und an der Rückseite durch hintere Querstreben (40) verbunden sind und daß die Frontseite von einer Tür (30) bedeckt ist, welche Öffnungen (71) zur Aufnahme der Gasanschlußkupplungen (31) aufweist, wobei die die Gasanschlußkupplungen (31) tragenden Halterungen (55) an den hinteren Querstreben (40) befestigt sind.

2. Versorgungseinheit nach Anspruch 1, **dadurch gekennzeichnet, daß** in den Öffnungen (71) der Tür (30) jeweils ein die Gasanschlußkupplung umgebender Blendenring (74) befestigt ist.

3. Versorgungseinheit nach Anspruch 1 oder 2, **dadurch gekennzeichnet, daß** die Halterungen (55) jeweils eine die Anschlußkupplungen (31) tragende Befestigungsplatte (57) aufweisen, die zur Anpassung an verschiedene Typen von Anschlußkupplungen (31) in unterschiedlichen Stellungen montierbar ist.

4. Versorgungseinheit nach einem der Ansprüche 1-3, **dadurch gekennzeichnet, daß** zusätzliche hintere Querstreben (41) zur Befestigung des Gehäuses (38) an einer Wand (12) vorgesehen sind.

5. Versorgungseinheit nach einem der Ansprüche 1-4, **dadurch gekennzeichnet, daß** in den Profilleisten (20,21) elektrische Steckdosen (23,25,26) angeordnet sind.

6. Versorgungseinheit nach einem der Ansprüche 1-5, **dadurch gekennzeichnet, daß** die Profilleisten (20,21) mit den hinteren Querstreben (40,41) einen spitzen Winkel einschließen.

7. Versorgungseinheit nach einem der Ansprüche 1-6, **dadurch gekennzeichnet, daß** die Profilleisten (20,21) einander gleich sind.

8. Versorgungseinheit nach einem der Ansprüche 1-7, **dadurch gekennzeichnet, daß** die Profilleisten (20,21) einen längslaufenden ersten Schraubkanal (43) für die Befestigung von Türscharnieren (34) und der vorderen Querstreben (39) aufweisen.

9. Versorgungseinheit nach einem der Ansprüche 1-8, **dadurch gekennzeichnet, daß** der erste Schraubkanal (43) in einem Sockel (44) mit schräger Anlagefläche (45) ausgebildet ist.

10. Versorgungseinheit nach Anspruch 9, **dadurch gekennzeichnet, daß** ein Schloßriegel (76) eines in der Tür (30) angeordneten Schlosses (75) die schräge Anlagefläche (45) hintergreift.

11. Versorgungseinheit nach einem der Ansprüche 1-10, **dadurch gekennzeichnet, daß** die Profilleisten einen längslaufenden zweiten Schraubkanal (51) für die Befestigung der hinteren Querstreben (40,41) aufweisen.

12. Versorgungseinheit nach einem der Ansprüche 1-11, **dadurch gekennzeichnet, daß** an der Tür (30) eine nach oben strahlende Leuchte (32) angeordnet ist.

13. Anordnung von mindestens zwei Versorgungseinheiten nach einem der Ansprüche 1-12, **dadurch gekennzeichnet, daß** benachbarte Versorgungseinheiten (10,11) in einem Abstand zueinander angeordnet sind, der mindestens der Breite eines Krankenbetts (13) entspricht und daß jeweils benachbarte Versorgungseinheiten (10,11) mit einem Querträger (14) verbunden sind, an dem eine Leuchte (15) schwenkbar angeordnet ist.

## Claims

1. Supply unit for sickrooms, comprising a housing (38) having one housing wall provided with gas connection couplings (31) for the connection of external gas consumers, the gas connection couplings (31) being mounted on a holder (55) fixedly secured to the housing,
**characterized in that**
the housing (38) has vertical lateral profile strips (20, 21) connected at the front side by front transverse struts (39) and by rear transverse struts (40) at the back side, and **in that** the front side is covered by a door (30) with openings (71) for accommodating the gas connection couplings (31), the holders (55) carrying the gas connection couplings (31) being secured to the rear transverse struts (40).

2. The supply unit of claim 1, **characterized in that** a cover ring (74) surrounding each gas connection coupling is secured respectively in the openings (71) in the door (30).

3. The supply unit of claim 1 or 2, **characterized in that** the holders (55) each have a mounting plate (57) carrying the connection couplings (31), which can be mounted at different positions in adaptation to different types of connection couplings (31).

4. The supply unit of one of claims 1-3, **characterized in that** additional rear transverse struts (41) are provided to secure the housing (38) to a wall (12).

5. The supply unit of one of claims 1-4, **characterized in that** electric sockets (23, 25, 26) are arranged in the profile strips (20, 21).

6. The supply unit of one of claims 1-5, **characterized in that** the profile strips (20, 21) and the rear transverse struts (40, 41) include an acute angle.

7. The supply unit of one of claims 1-6, **characterized in that** the profile strips (20, 21) are identical.

8. The supply unit of one of claims 1-7, **characterized in that** the profile strips (20, 21) comprise a longitudinally extending first screw channel (43) for fastening door hinges (34) and the front transverse struts (39).

9. The supply unit of one of claims 1-8, **characterized in that** the first screw channel (43) is formed in a base (44) with an inclined contact surface (45).

10. The supply unit of claim 9, **characterized in that** a latch (76) of a lock (75) in the door (30) engages behind the inclined contact surface (45).

11. The supply unit of one of claims 1-10, **characterized in that** the profile strips have a longitudinally extending second screw channel (51) for fastening the rear transverse struts (40, 41).

12. The supply unit of one of claims 1-11, **characterized in that** the door (30) is provided with an upward radiating light (32).

13. Arrangement of at least two supply units according to one of claims 1-12, **characterized in that** adjacent supply units (10, 11) are arranged at a mutual distance that at least corresponds to the width of a sickbed (13) and **in that** respective adjacent supply units (10, 11) are connected through a transverse strut (14) on which a light is pivotally mounted.

## Revendications

1. Unité d'alimentation pour chambre d'hôpital, comportant un caisson (38) qui présente dans une paroi de caisson des accouplements de raccordement au gaz (31) pour le raccordement de dispositifs de consommation de gaz externes, dans laquelle les accouplements de raccordement au gaz (31) sont montés sur une fixation (55) fixée au caisson,
***caractérisée en ce que*** le caisson (38) présente des barres profilées (20, 21) latérales verticales qui sont raccordées, du coté frontal, par des traverses antérieures (39) et, du côté postérieur, par des traverses postérieures (40), et **en ce que** le côté frontal est couvert par une porte (30) qui présente des ouvertures (71) pour recevoir les accouplements de raccordement au gaz (31), les fixations (55) qui portent les accouplements de raccordement au gaz (31) étant fixées aux traverses postérieures (40).

2. Unité d'alimentation suivant la revendication 1, **caractérisée en ce que** chaque fois un anneau d'encadrement (74) qui entoure l'accouplement de raccordement au gaz est fixé dans les ouvertures (71) de la porte (30).

3. Unité d'alimentation suivant la revendication 1 ou 2, **caractérisée en ce que** les fixations (55) présentent chaque fois une plaque de fixation (57) qui porte les accouplements de raccordement (31) et qui peut être montée dans différentes positions pour l'adaptation à différents types d'accouplements de raccordement (31).

4. Unité d'alimentation suivant l'une des revendications 1 à 3, **caractérisée en ce que** des traverses postérieures (41) supplémentaires sont prévues pour la fixation du caisson (38) à une paroi (12).

5. Unité d'alimentation suivant l'une des revendications 1 à 4, **caractérisée en ce que** des prises électriques (23, 25, 26) sont agencées dans les barres profilées (20, 21).

6. Unité d'alimentation suivant l'une des revendications 1 à 5 **caractérisée en ce que** les barres profilées (20, 21) forment avec les traverses postérieures (40, 41) un angle aigu.

7. Unité d'alimentation suivant l'une des revendications 1 à 6, **caractérisée en ce que** les barres profilées (20, 21) sont égales l'une à l'autre.

8. Unité d'alimentation suivant l'une des revendications 1 à 7, **caractérisée en ce que** les barres profilées (20, 21) présentent un premier canal à vis (43), s'étendant longitudinalement, pour la fixation de charnières de porte (34) et des traverses antérieures (39).

9. Unité d'alimentation suivant l'une des revendications 1 à 8, **caractérisée en ce que** le premier canal à vis (43) est réalisé dans un socle (44) avec des faces d'appui obliques (45).

10. Unité d'alimentation suivant la revendication 9, **caractérisée en ce qu'**un pêne de serrure (76) d'une serrure (75) agencée dans la porte (30) prend derrière la face d'appui oblique (45).

11. Unité d'alimentation suivant l'une des revendications 1 à 10, **caractérisée en ce que** les barres profilées présentent un second canal à vis (51), qui s'étend longitudinalement, pour la fixation des traverses postérieures (40, 41).

12. Unité d'alimentation suivant l'une des revendications 1 à 11, **caractérisée en ce qu'**une lampe (32) qui rayonne vers le haut est agencée sur la porte (30).

13. Agencement d'au moins deux unités d'alimentation suivant l'une des revendications 1 à 12, **caractérisé en ce que** des unités d'alimentation voisines (10, 11) sont agencées à une distance l'une de l'autre qui correspond au moins à la largeur d'un lit de malade (13) et **en ce que** des unités d'alimentation (10, 11) respectivement voisines sont raccordées par une traverse (14) sur laquelle est agencée de manière pivotante une lampe (15).
